# EUROPEAN PATENT APPLICATION

(11) **EP 1 459 950 A1**
(43) Date of publication of application: **22.09.2004**
(21) Application number: 04006561.7
(22) Date of filing: 18.03.2004
(51) Int. Cl.: B60T 8/48, B60T 7/12

(54) **Brake pressure control device in brake system**

(30) Priority: 19.03.2003 JP 2003075379
(71) Applicant: Advics Co., Ltd., Kariya-shi, Aichi-ken (JP)
(72) Inventor: Yonemura, Shuichi, c/o ADVICS CO., LTD., Kariya-shi, Aichi-ken (JP); Katayama, Yoshio, c/o ADVICS CO., LTD., Kariya-shi, Aichi-ken (JP)
(74) Representative: Leson, Thomas Johannes Alois, Dipl.-Ing.

(57) **Abstract**

A brake system is provided with a brake pressure control device (1) which is light in weight and low in cost and which is capable of selectively performing a brake assist control and a slope starting control. An electromagnetic pressure control valve (12f,12r) for generating a control differential pressure is connected between a master cylinder (5) and wheel cylinders (10fl,10fr,10rl,10rr), and the control differential pressure is set to an assist increase pressure under the brake assist control. A brake fluid supply device such as a motor-driven pump (21f,21r) is operated in the brake pressure control device (1) to supply brake fluid between the electromagnetic pressure control valve (12f,12r) and each of the wheel cylinders (10fl,10fr,10rl,10rr). The fluid pressure applied to the wheel cylinders (10fl,10fr,10rl,10rr) is increased by the assist increase pressure higher than the fluid pressure delivered from the master cylinder (5), so that a large brake force is applied to road wheels (3fl,3fr,3rl,3rr). On the other hand, the brake fluid supply device (1) is also operated under the brake assist control. Thus, even when the release of a brake pedal (2) causes the master cylinder (5) to deliver the fluid of zero-pressure, the stop holding pressure remains unchanged in each wheel cylinder (10fl,10fr,10rl,10rr), so that the road wheels (3fl,3fr,3rl,3rr) are kept stopped with the brake forces applied thereon.

## Description

### INCORPORATION BY REFERENCE

This application is based on and claims priority under 35 U.S.C. sctn. 119 with respect to Japanese Application No. 2003-75379 filed on March 19, 2003, the entire content of which is incorporated herein by reference.

### BACKGROUND OF THE INVENTION

### Field of the Invention:

The present invention relates to a brake pressure control device for controlling the fluid pressure supplied to wheel cylinders In a brake system of the type that a master cylinder supplies brake fluid to the wheel cylinders each serving as brake force generator thereby to apply brake force to road wheels.

### Discussion of the Related Art:

Heretofore, there has been known a brake assist control technology as described in United States patent No. 6,227,629 B1 to H. Yoshida et al. In this technology, under an ordinary control, a master cylinder supplies each of wheel cylinders serving as brake force generators for road wheels, with the brake pressure which depends on a stepping force exerted on a brake pedal thereby to apply brake forces to the road wheels. Under a brake assist control, e.g., in the event that an emergency braking is instructed, on the contrary, the communication between the master cylinder and each wheel cylinder is disconnected by an electromagnetic shutoff valve, instead of which a fluid pump supplies the wheel cylinders with the fluid pressures thereby to apply to the road wheels brake forces which are lager than those applied under the ordinary control.

Further, Japanese unexamined, published utility model application No. 6-74542 describes a slope starting control technology, wherein a solenoid-operated valve connected between a master cylinder and wheel cylinders serving as brake force generators for road wheels is operated to close brake fluid pressure in the wheel cylinders thereby to hold the vehicle stopped at the time of stating on an ascent or slope. In this known technology, the degree of a sloping road surface is detected by a slope sensor, and the opening degree of the solenoid-operated valve is controlled in dependence on a detection signal of the slope sensor to reduce an excessively high fluid pressure in the wheel cylinders, Thus, at the time of starting on the ascent or slope, the fluid pressure in the wheel cylinders can be released quickly without causing any shock, so that the vehicle starting on the ascent or stope can be done smoothly with a good steering feeling.

In recent years, there has been required a brake pressure control device which is capable of performing both functions for the foregoing brake assist control and the foregoing slope starting control. However, if an attempt is made to incorporate discrete devices for the both functions between the master cylinder and the wheel cylinders independently of each other, the resultant brake pressure control device could be of disadvantage in light of weight and cost.

### SUMMARY OF THE INVENTION

Accordingly, in view of the foregoing drawbacks, it is a primary object of the present invention to provide an improved brake pressure control device which is light in weight and low in cost and is capable of performing the aforementioned brake assist control and the aforementioned slope starting control.

Briefly, according to the present invention, there is provided a brake pressure control device in a brake system of the type that brake fluid whose pressure depends on the operation force exerted on a brake pedal is supplied from a master cylinder to a wheel cylinder serving as brake force generator thereby to apply a brake force to a road wheel. The brake pressure control device comprises an electromagnetic pressure control valve having Inlet and outlet ports respectively connected to the master cylinder and the wheel cylinder for controlling the fluid pressure at the outlet port to become higher from zero to a control differential pressure than the pressure at the inlet port in dependence on a control current applied thereto, and a fluid pump connected at ejection and suction ports thereof respectively to the outlet and inlet ports of the electromagnetic pressure control valve. The brake pressure control device further comprises control means for operating the fluid pump and for setting the control differential pressure generated by the electromagnetic pressure control valve to an assist increase pressure at the execution of a brake assist control and to a stop holding pressure at the execution of a slope starting control.

With this configuration, the control differential pressure which is generated by the electromagnetic pressure control valve connected between the master cylinder and the wheel cylinder is set to the assist increase pressure when the initiation of the brake assist control is judged. In this state, the fluid pump is brought into operation to supply brake fluid between the wheel cylinder and the electromagnetic pressure control valve. Thus, the fluid pressure supplied to the wheel cylinder becomes higher by the assist increase pressure than the fluid pressure delivered from the master cylinder, so that a larger brake force than that in the ordinary state is applied to a road wheel. The control differential pressure generated by the electromagnetic pressure control valve is set to the stop holding pressure under the slope starting control. Thus, even when the release of a brake pedal causes the master cylinder to deliver the fluid of zero-pressure, the stop holding pressure remains closed in the wheel cylinder, so that the road wheel is kept stopped with a brake force applied thereon. In this manner, the brake assist control and the slope starting control can be selectively executed by utilizing the electromagnetic pressure control valve commonly for the both controls and by altering the control differential pressure generated by the electromagnetic control valve. Accordingly, the brake pressure control device according to the present invention can perform the both controls in a construction which is light in weight and low in cost.

### BRIEF DESCRIPTION OF THE ACCOMPANYING DRAWINGS

The foregoing and other objects and many of the attendant advantages of the present invention may readily be appreciated as the same becomes better understood by reference to the preferred embodiment of the present invention when considered in connection with the accompanying drawings, wherein like reference numerals designate the same or corresponding parts throughout several views, and in which:
Figure 1 is a system diagram combining a hydraulic circuit diagram and a block diagram of an electronic control unit for a brake pressure control device in one embodiment according to the present invention;
Figure 2 is a flow chart of a main program for brake fluid control in the embodiment shown in Figure 1;
Figure 3 is a flow chart of a brake assist control initiation judgment provided in the main program;
Figure 4 is a flow chart of a brake assist control termination judgment provided in the main program;
Figure 5 is a flow chart of a slope starting control initiation judgment provided in the main program;
Figure 6 is a flow chart of a slope starting control termination judgment provided in the main program;
Figure 7 is a flow chart of a control differential pressure decision processing program provided in the main program; and
Figure 8 is a flow chart of a valve control processing program provided in the main program.

### DETAILED DESCRIPTION OF THE PREFERRED EMBODIMENT

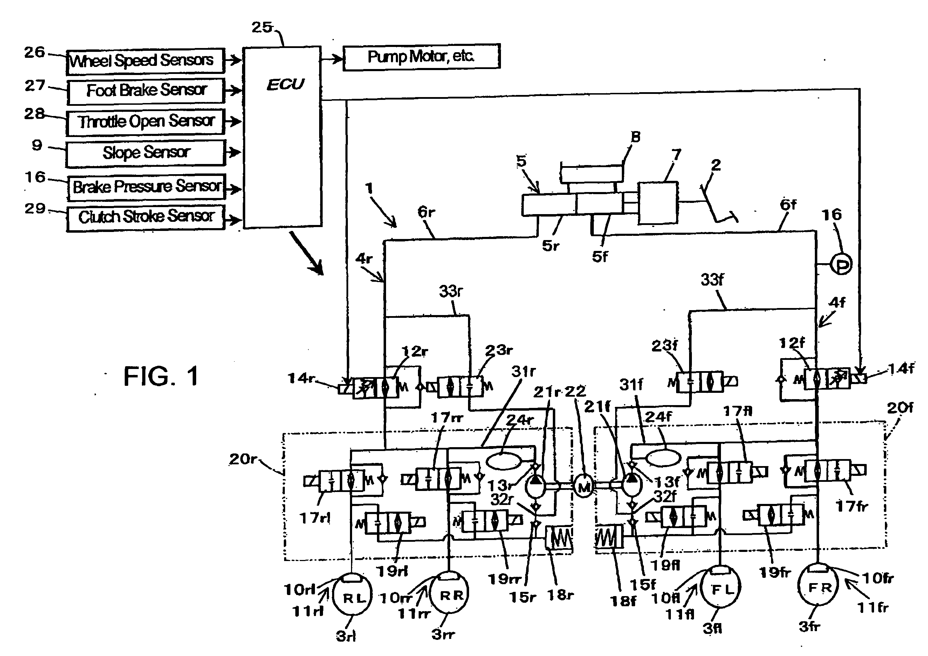

A brake pressure control device in one embodiment according to the present invention will be described hereinafter with reference to the accompanying drawings. In the brake pressure control device 1 in this particular embodiment, a front wheel brake system 4f and a rear wheel brake system 4r which take substantially the same constructions with each other are provided independently for applying brake forces respectively to right and left front road wheels 3fr, 3fl and right and left rear road wheels 3rr, 3rl when the driver steps on a brake pedal 2. Since the components which constitute the front and rear brake systems 4f, 4r are the same in construction and operation, each component for the front brake system 4f and that for the rear brake system 4r which corresponds thereto in construction and operation are shown in Figure 1 to be designated by the same reference numerals but with different suffixes "f' and "r". Further, each component on the right wheel and that on the left wheel which corresponds thereto are given additional or second suffixes "r" and "l" following the first suffixes "f" and "r" to distinguish one for the right from the other for the left. It is to be noted that in the following description, each component is identified by a numeral only when it is not to be distinguished of whether it is of the front, the rear, the right or the left.

A numeral 5 denotes a dual master cylinder, which, when the brake pedal 2 is stepped on, delivers brake fluids of the pressure, corresponding to the driver's stepping force, from fluid chambers 5f, 5r for the front and rear wheels to conduits 6f, 6r. A numeral 7 denotes a vacuum booster, which is interposed between an operating rod (not numbered) axially movable by the brake pedal 2 and a piston rod (not shown) of the master cylinder 5. The vacuum booster 7 makes the intake negative pressure of a combustion engine (not shown) act on a diaphragm thereby to enforce or augment the stepping force exerted on the brake pedal 2. A numeral 8 designates a reservoir containing brake fluid therein, and the reservoir 8 replenishes the brake fluid to the dual master cylinder 5.

The pressurized fluids which are delivered from the dual master cylinder 5 to the conduits 6f, 6r are supplied respectively to front and rear wheel cylinders 10fr, 10fl, 10rr, 1 Orl. Thus, brake shoes for disc brakes for example are operated, so that brake forces are applied to the right and left front road wheels 3fr, 3fl and the right and left rear road wheels 3rr, 3rl, Each wheel cylinder 10, an associated disc brake and the like constitute a brake force generator 11 for each road wheel 3.

Numerals 12f, 12r respectively designate solenoid-operated linear pressure control valves serving as electromagnetic pressure control valves. By means of conduits 6f, 6r, the linear pressure control valves 12f, 12r are connected to the fluid chambers 5f, 5r of the master cylinder 5 at inlet ports thereof, respectively. Further, an outlet port of the linear pressure control valve 12f is connected to the front wheel cylinders 10fr, 10fl, while an outlet port of the linear pressure control valve 12r is connected to the rear wheel cylinders 10rr, 10r. Each linear pressure control valve 12 performs the pressure control so that in proportion to a control current applied to a linear control solenoid 14 thereof, the fluid pressure from the outlet port becomes higher by zero through a control differential pressure than the fluid pressure to the inlet port. When a slope sensor 9 implements a slope starting control upon detection of the slope of a road surface on which the vehicle is about to start, a control current corresponding to the fluid pressure which is required for the vehicle to remain stopped thereon is applied to the linear control solenoid 14 of each linear pressure control valve 12. As a consequence, even when the fluid pressure to the inlet port of each linear pressure control valve 12 goes down to zero, the pressure for the vehicle to remain stropped thereon which is a certain level of the control differential pressure is maintained at the outlet port of each linear pressure control valve 12, as referred to later in grater detail. Further, that the brake pedal 2 is being stepped on strongly and quickly is detected for example from the measuring value and the increase rate of a brake pressure sensor 16 connected to the fluid pressure chamber 5f of the master cylinder 5 and hence, an emergency braking is judged to have taken place. In this event, the linear control solenoid 14 of each linear pressure control valve 12 is given a control current applied thereto in correspondence to an assist increase pressure, so that the fluid pressure at the outlet port of the linear pressure control valve 12 becomes higher by the assist increase pressure than that at the inlet port, as referred to later in grater detail. Under an ordinary control, on the other hand, each linear pressure control valve 12 is shifted to an opening position with the non-excitation of the linear control solenoid 14 thereby to let the inlet port and the outlet port communicate directly. Between the inlet and outlet portions of each linear pressure control valve 12 and in parallel with the same, there is Interposed a check valve (not numbered) for permitting the fluid to flow from the inlet port to the outlet port.

The conduit 6f connected to the outlet port of the linear pressure control valve 12f branches into two lines: one connected to the right front wheel cylinder 10fr through a solenoid-operated shutoff valve 17fr and the other connected to the left front wheel cylinder 10fl through a solenoid-operated shutoff valve 17fl. Similarly, the conduit 6r connected to the outlet port of the linear pressure control valve 12r branches into two lines: one connected to the right rear wheel cylinder 10rr through a solenoid-operated shutoff valve 17rr and the other connected to the left real wheel cylinder 10rl through a solenoid-operated shutoff valve 17rl. Each of the solenoid-operated shutoff valves 17fr, 17fl, 17rr, 17rl is provided in parallel thereto with a check valve (not numbered) for permitting the fluid to flow from an outlet port to an inlet port of the associated shutoff valve 17. Further, solenoid-operated shutoff valves 19fr, 19fl are connected respectively between the outlet port of the solenoid-operated shutoff valve 17fr and a reservoir 18f and between the outlet port of the solenoid-operated shutoff valve 17fl and the reservoir 18f. Similarly, solenoid-operated shutoff valves 19rr, 19rl are connected respectively between the outlet port of the solenoid-operated shutoff valve 17rr and a reservoir 18r and between the outlet port of the solenoid-operated shutoff valve 17rl and the reservoir 18r. Each of the reservoirs 18f, 18r is constituted by closing a bottomed casing with a piston urged by a weak compression spring. Each combination of the solenoid-operated shutoff valves 17 and 19 constitutes a fluid pressure control valve device 20 which controls the pressure increase, pressure holding and pressure decrease for the associated wheel cylinder 10. The inlet port and outlet port of each solenoid-operated shutoff valve 17 serve respectively as an inlet port and an outlet port of each fluid pressure control valve device 20 associated thereto, and the outlet port of each solenoid-operated shutoff valve 19 serves as a drain port of each fluid pressure control valve device 20 associated thereto.

Reference numerals 21 r, 21f respectively denote fluid pumps which are driven commonly by an electric motor 22. An ejection port of the fluid pump 21f is connected by means of a conduit (e.g., pipe or tube) 31f to the mid point between the outlet port of the solenoid-operated linear pressure control valve 12f and the inlet port of the fluid pressure control valve device 20f through a check valve 13f which prevents the fluid from flowing toward the ejection port of the fluid pump 21f. Similarly, an ejection port of the fluid pressure pump 21r is connected by means of a conduit (e.g., pipe or tube) 31r to the mid point between the outlet port of the solenoid-operated linear pressure control valve 12r and the inlet port of the fluid pressure control valve device 20r through a check valve 13r which prevents the fluid from flowing toward the ejection port of the fluid pump 21 r. Suction ports of the fluid pumps 21 f, 21 r are connected by means of conduits 33f, 33r to the Inlet ports of the solenoid-operated linear pressure control valves 12f, 12r through solenoid-operated shutoff valves 23f, 23r, respectively. The suction port of the pump 21f is also connected by means of a conduit 32f to the mid point between the drain port of the fluid pressure control valve device 20f and the reservoir 18f through a check valve 15f which permits the fluid to flow toward the suction port, and the suction port of the pump 21r is also connected by means of a conduit 32r to the mid point between the drain port of the fluid pressure control valve device 20r and the reservoir 18r through another check valve 15r which permits the fluid to flow toward the suction port. Numerals 24f, 24r respectively denote fluid dampers or accumulators each for absorbing the pulsation in the pressurized fluid ejected from the associated fluid pump 21.

The brake fluid pressure control device 1 is further provided with an electronic control unit (ECU) 25 incorporating a CPU (not shown) therein. The unit 25 takes inputs from wheel speed sensors 26 for detecting the wheel speeds of the road wheels 3, a foot brake sensor 27 for detecting whether or not the brake pedal 2 is being stepped on, a brake pressure sensor 16 for detecting the brake fluid pressure, a throttle opening-degree sensor 28 for detecting the stepping amount of a gas pedal or accelerator (not shown), a clutch stroke sensor 29 for detecting the engagement/disengagement (i.e., ON/OFF) of a clutch (not shown), and a slope sensor 9 for detecting the slope angle of a road surface which the vehicle remains stopped on. Based on these inputs signals, the electronic control unit 25 executes various programs to output control signals to the solenoid-operated linear pressure control valves 12f, 12r, the fluid pressure control valve devices 20f, 20r, the electric motor 22, the solenoid-operated shutoff valves 23f, 23r and the like, so that the fluid pressure in the wheel cylinder 10 of each brake force generator 11 can be controlled to control the brake force applied to each road wheel 3.

### (Operation)

The operation of the brake pressure control device 1 as constructed above will be described hereafter. It is to be noted that for the sake of brevity, the following description of the operation is made with respect to the front wheel brake system 4f only because the front and rear wheel brake systems 4f, 4r are operated in substantially the same manner. Therefore, the following description directed to the front wheel brake system 4f equally applies to the rear wheel brake system 4r unless particularly referred to on the contrary.

Under the ordinary control, when the brake pedal 2 is stepped on, the brake pressure delivered from the pressure chamber 5f of the master cylinder 5 is supplied to the wheel cylinders 10fr, 10fl through the solenoid-operated linear pressure control valves 12f and the solenoid-operated shutoff valves 17fr, 17fl, whereby brake forces are applied to the road wheels 3fr, 3fl. If the condition for needing an anti-lock brake control is satisfied at this time, the electronic control unit 25 implements the anti-lock brake control. Under this control, the electronic control unit 25 controls the opening and closing of the solenoid-operated shutoff valves 17fr, 17fl, 19fr, 19fl thereby to control the pressures in the wheel cylinders 10fr, 10fl. Therefore, the increase, retention and decrease in the brake forces applied to the front road wheels 3fr, 3fl are repetitively performed lest the front road wheels 3fr, 3fl should slip on the road surface.

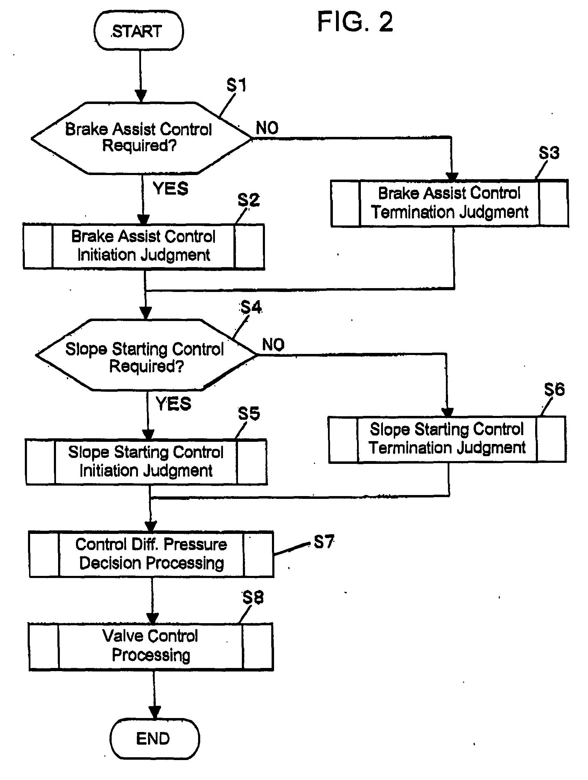

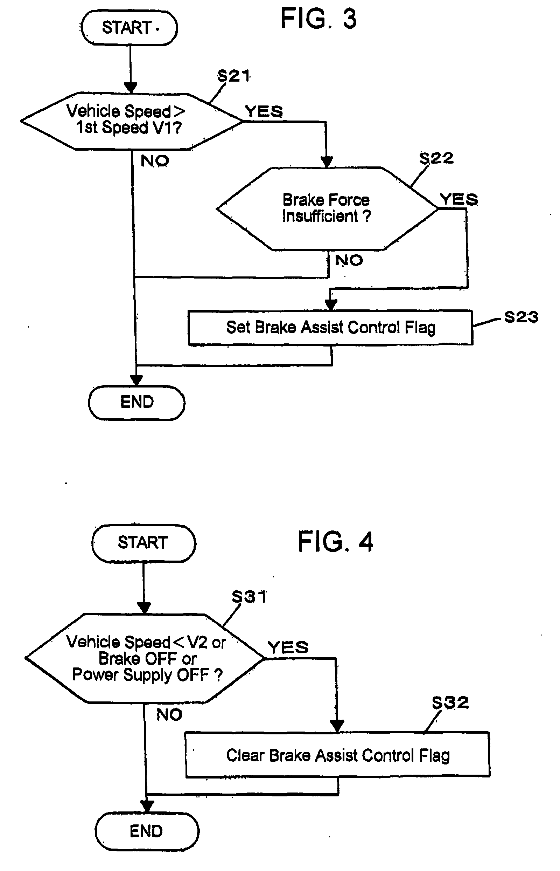

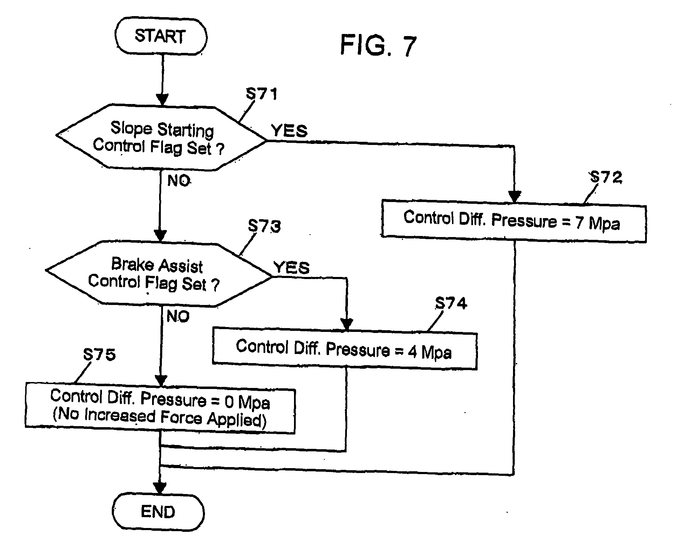

The electronic control unit 25 executes a main program for brake pressure control shown in Figure 2 at a predetermined time interval, and a judgment is made at step S1 of whether or not the brake assist control is demanded. The brake assist control is executed when it Is needed to generate a larger brake force than that in the ordinary state such as in the case of emergency braking or in the case that a strong brake force is being applied. For example, in the case of emergency braking, when the brake pedal 2 is stepped on quickly, the pressure of the fluid delivered from the master cylinder 5 rises sharply. The pressure of the brake fluid delivered from the fluid chamber 5f is detected by a brake pressure sensor 16, and when the increase rate of the detected value is grater than a predetermined value, it is judged that the brake assist control is being needed. Further, when the pressure in the master cylinder 5 is high, it is judged that the driver needs a stronger brake force and hence that the brake assist control is being required. When such demand is present, a brake assist control initiation judgment program shown in Figure 3 is executed at step S2. In this program, when the vehicle speed (V) is judged at step S21 to be faster than a first predetermined speed (V1), and when the brake force is judged at step S22 to be insufficient because the brake fluid pressure from the master cylinder 5 which is detected by the brake pressure sensor 16 is lower than a predetermined pressure, a brake assist control flag is set at step S23. Steps 4 through S6 in Figure 2 are executed for a slope starting control, following which a control differential pressure decision processing shown in Figure 7 is executed at step S7. The vehicle speed (V) can be obtained from an average value of the wheel speeds Srr, Srl of driven road wheels, i.e., the rear road wheels 3rr, 3rl detected by the wheel speed sensors 26.

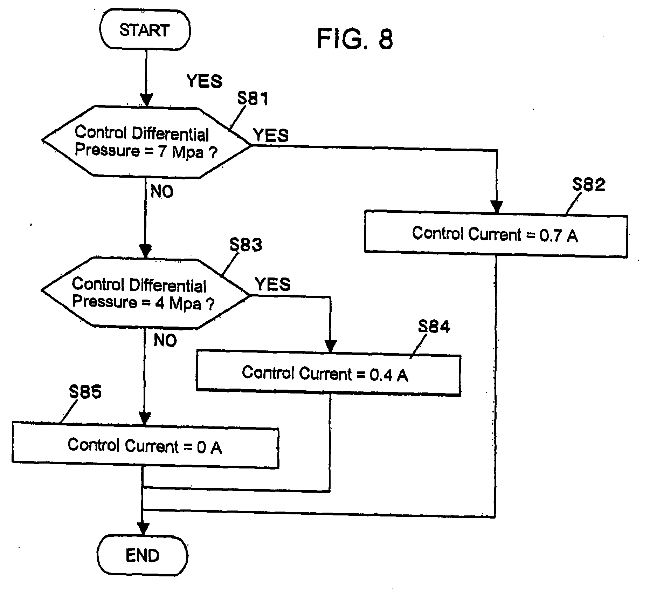

After it is judged at step S71 whether or not a slope starting control flag has been set, it is further judged at step S73 whether or not the brake assist control flag has been set. If the brake assist control flag is judged to have been set, the control differential pressure generated by the solenoid,operated linear pressure control valve 12f is set to an assist increase pressure, e.g., 4 Mpa (megapascals) at step S74 before returning to the main program. If the both flags have not been set on the contrary, the brake pressure control device 1 is under the ordinary control, in which case the control differential pressure generated by the solenoid-operated linear pressure control valve 12f is set to zero (0) Mpa at step S75. Subsequently, step S8 in Figure 2 is reached to execute a valve control processing program shown in detail in Figure 8. The control differential pressure being set is judged at step S81 of whether to be 7 Mpa, and since the answer is NO, it is then judged at step S83 of whether to be 4 Mpa.

Since it is 4 Mpa for the slope staring control, a control current of 0.4 A (ampere) is applied to the solenoid-operated linear pressure control valve 12f at step S84. In this state, the fluid pump 21 is driven by the electric motor 22, and the solenoid-operated shutoff valve 23f is switched to the opening position. Since the shutoff valves 17fr, 17fl and the shutoff valves 19fr, 19fl are at the opening positions and the closed positions respectively, the brake fluid is circulated through the fluid pump 21 f, the linear pressure control valve 12f and the shutoff valve 23f. Thus, the fluid pressure supplied to the wheel cylinders 10fr, 10fl becomes higher by the assist increase pressure of 4 Mpa than that delivered from the master cylinder 5, whereby a lager brake force than that in the ordinary state is applied to the road wheels 3fr, 3fl. If the condition for the anti-lock brake control is satisfied in this state, the electronic control unit 25 executes the anti-lock brake control, However, if the judgment is NO at step S83, no control current is applied to the linear pressure control valve 12f at step S85.

While the brake pedal 2 remains stepped on, the detection value of the brake pressure sensor 16 is small in the increase rate, and this results in judging at step S1 that the brake assist control is not being needed. Thus, step S3 is reached to execute a brake assist control termination judgment program as shown in Figure 4. That is, it is judged at step S31 whether or not the vehicle speed (V) is smaller than another or second predetermined speed (V2) to keep the vehicle stopped, whether or not the brake pedal 2 is not being stepped on with the foot brake sensor 27 being OFF or whether or not the power supply is discontinued. When either of these conditions is satisfied, the braking operation is judged to have been ended to clear the brake assist control flag at step S32.

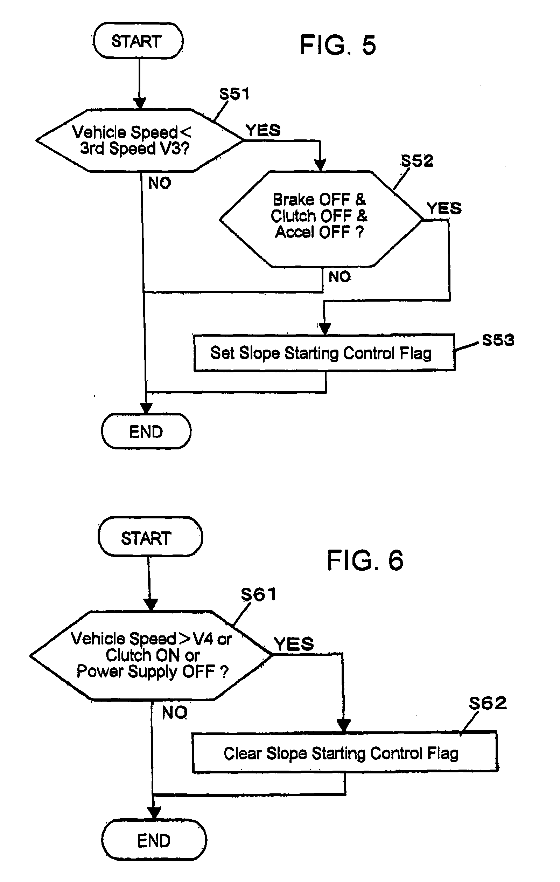

At step S4 of the main program, it Is judged whether or not the slope starting control is being required. The slope starting control is the control of the type that the vehicle can be held stopped by supplying a stop holding pressure in the wheel cylinders 10fr, 10fl thereby to apply brake forces to the road wheels 3fr, 3fl when the vehicle is about to start after stopped on an ascent or slope. On the condition that the road surface is detected by the slope sensor 9 to be a slope or ascent and that the slope starting control flag has not been set, it is judged at step S4 that the slop starting control is being required. In this case, step S5 is reached to execute the slope starting control initiation judgment program. As shown in Figure 5, when it is judged at step S51 that the vehicle speed (V) is slower than another or third speed (V3) and when it is then judged at step S52 that the brake pedal 2 is detected by the foot brake sensor 27 not to have been stepped on (i.e., OFF-state), that the clutch is detected by the clutch stroke sensor 29 to have been disengaged (i.e., OFF-state) and that the accelerator is detected by the throttle opening-degree sensor 28 not to have been stepped on (i.e., OFF-state), the slope starting control flag is set at S53 since the slope starting control is being required. Then, the control differential pressure decision processing program shown in Figure 7 is executed, whereby the control differential pressure generated by the linear pressure control valve 12f is set to the stop holding pressure, e.g., 7 Mpa at step S72 before returning to the main program. Therefore, the valve control processing program is then executed at step S8, and it is judged at step S81 in Figure 8 that the control differential pressure is 7 Mpa, and a control current of, e.g., 0.7 A (ampere) is applied to the linear control solenoid 14f of the linear pressure control valve 12f at step S82. Consequently, even when the brake pressure delivered from the master cylinder 5 is reduced to zero (0) because the brake pedal 2 is released for starting the vehicle on the ascent or slope, the wheel cylinders 10fr, 10fl keep the stop holding pressure of 7 Mpa therein, so that the road wheels 3fr, 3fl are kept to have been braked.

While the slope starting control flag is set, it is judged at step S4 that the slope starting control is not required thereby to execute the slope starting control termination judgment program shown in Figure 6 at step S6. In this judgment program, it is judged at step S61 that the vehicle has started because the vehicle speed (V) is higher than another or fourth predetermined value (V4), that the clutch is judged to have been connected (i.e., ON-state), or that the power supply is made OFF. If either of these judgments is affirmative, the slope starting control is judged to be terminated, so that the slope starting control flag is cleared at step S62.

It is now assumed that during traveling on a slope or ascent, a quick braking is performed to execute the brake assist control and then, the brake pedal 2 is released in the state that the vehicle speed (V) becomes slower than the third predetermined speed (V3) so that in dependence upon the timings at which the various programs are executed, the slope starting control is executed during the brake assist control to set the slope starting control flag before the brake assist control flag is cleared. In this case, the set speed (V2) at which the brake assist control flag is cleared is vary slow and is equal to or slightly smaller than the third predetermined speed (V3) at which the slope starting control program flag is set. In the brake assist control, the control current of 0.4 A (amperes) is applied to the linear control solenoid 14 of the linear pressure control valve 12, the fluid pump 21f f is driven by the electric motor 22, the shutoff valve 23 is switched into the opening position, and the brake fluid is circulated through the fluid pump 21f, the linear pressure control valve 12f and the shutoff valve 23f. Consequently, the fluid pressure supplied to the wheel cylinders 10fr, 10fl becomes higher by the assist increase pressure of 4 Mpa than the fluid pressure delivered from the master cylinder 5, so that the road wheels 3fr, 3fl are given a larger brake force than that given in the ordinary state.

On the other hand, the slope sensor 9 identifies the vehicle traveling road as a slope or ascent when the brake pedal 2 is released In the sate that the vehicle speed (V) has come down slower than the third predetermined vehicle speed (V3). Thus, the slope starting control is implemented under the following condition. This condition for the slope starting control requires that the non-stepping (i.e., OFF-state) of the brake pedal 2 is detected by the foot brake sensor 27, that the disconnection (i.e., OFF-state) of the clutch is detected by the clutch stroke sensor 29 and that the non-stepping (i.e., OFF-state) of the accelerator is detected by the throttle opening-degree sensor 28, When the foot brake sensor 27 detects that the brake pedal 2 is not being stepped on, the brake assist control is terminated in accordance with the brake assist control judgment termination program. When both of the brake assist control flag and the slope starting control flag are brought into set states in dependence on the timings at which the slope starting control initiation judging program and the brake assist control termination judging program are respectively executed, the setting of the control differential pressure generated by the linear pressure control valve 12f is altered from the assist increase pressure of 4 Mpa to the stop holding pressure of 7 Mpa in accordance with the control differential pressure decision processing program. As a consequence, the electric current applied to the linear control solenoid 14f is altered from 0.4 A to 0.7 A in accordance with the valve control processing program, Since the control differential pressure generated by the linear pressure control valve 12f is altered from the base pressure of 4 Mpa for the brake assist control to 7 Mpa in this way, the fluid pressure acting in the wheel cylinders 10fr, 10fl can be smoothly varied without causing any shock.

Further, it is assumed that the brake assist control is executed in mid course of the slope starting control. This takes place when the brake is applied sharply to set the brake assist control flag before the slope starting control flag is cleared in mid course of the slope starting control, In this case, the control differential pressure generated by the linear pressure control valve 12f is kept to be the stop holding pressure of 7 Mpa for the slope starting control, whereby the electric current applied to the linear control solenoid 14f remains at 0.7A. Since the control differential pressure generated by the linear pressure control valve 12f is continued to be the stop holding pressure of 7 Mpa for the slope starting control in this way, the vehicle can be reliably stopped on the ascent or slop.

In the foregoing embodiment, the stop holding pressure (i.e., 7 Mpa as exemplified above) under the slope starting control is set higher than the assist increase pressure (i.e., 4 Mpa as exemplified above) under the brake assist control. However, as long as the electromagnetic pressure control valve is designed to generate control differential pressures which are different respectively for the slop starting control and the brake assist control, it is not required that the former pressure is necessarily higher than the latter.

Further, although in the foregoing embodiment, the brake pressure control device 1 is designed to control the pressures supplied to plural or four wheel cylinders 10fr 10fl, 1 0rr, 10rl for the right end left front road wheels 3fr, 3fl and the right and left rear road wheels 3rr, 3rl, it may be practiced to control the brake pressure supplied to at least one wheel cylinder for at least one road wheel.

Finally, various features and many of the attendant advantages in the foregoing embodiment will be summarized as follows:

In one aspect of the forgoing embodiment, as typically shown in Figure 1, the control differential pressure which is generated by the electromagnetic pressure control valve 12f (12r) connected between the master cylinder 5 and the wheel cylinder 10fr (10fl, 10rr, 10rl) is set to the assist increase pressure (e.g., 4 Mpa) when the initiation of the brake assist control is judged. In this state, the fluid pump 21 f (21 r) is brought into operation to supply brake fluid between the wheel cylinder 10fr (10fl, 10rr, 10rl) and the electromagnetic pressure control valve 12f (12r). Thus, the fluid pressure supplied to the wheel cylinder 10fr (10fl, 10rr, 10rl) becomes higher by the assist increase pressure than the fluid pressure delivered from the master cylinder 5, so that a larger brake force than that in the ordinary state is applied to a road wheel 3fr (3fl, 3rr, 3rl). The control differential pressure generated by the electromagnetic pressure control valve 12f (12r) is set to the stop holding pressure (e.g., 7 Mpa) under the slope starting control. Thus, even when the release of a brake pedal 2 causes the master cylinder 5 to deliver the fluid of zero-pressure, the stop holding pressure remains closed in the wheel cylinder 10fr (10fl, 10rr, 10rl), so that the road wheel 3fr (3fl, 3rr, 3rl) is kept stopped reliably with the brake force applied thereon, In this manner, the brake assist control and the slope starting control can be selectively executed by utilizing the electromagnetic pressure control valve 12f (12r) commonly for the both controls and by altering the control differential pressure generated by the electromagnetic pressure control valve 12f (12r). Accordingly, the brake pressure control device 1 according to the present invention can perform the both controls in the construction which is light in weight and low in cost.

In another aspect of the forgoing embodiment, the inlet port, outlet port and drain port of the fluid pressure control valve device 20f (20r) are respectively connected to the outlet port of the electromagnetic pressure control valve 12f (12r), the wheel cylinder 10fr (10fl, 10rr, 10rl) and a reservoir 18f, and the fluid flow toward the ejection port of the fluid pump 21f is prevented by the check valve 13f (13r). The fluid pressure control valve device 20f (20r) selectively makes the outlet port thereof and the wheel cylinder 10fr (10fl, 10rr, 10rl) communicate with each other, blocked from each other and communicate with the reservoir 18f (18r). Thus, it can be realized to control the fluid pressure in the wheel cylinder 10fr (10fl, 10rr, 10rl) to the respective desired pressures under the ordinary control, the brake assist control and the slope starting control by selectively increasing, holding and decreasing the pressure in the wheel cylinder 10fr (10fl, 10rr, 10rl).

In still another aspect of the forgoing embodiment, it can be realized to make the electromagnetic pressure control valve 12f (12r) selectively generate the stop holding pressure and the assist increase pressure which are adequate respectively for the slope starting control and the brake assist control.

In a further aspect of the forgoing embodiment, since the control differential pressure generated by the electromagnetic pressure control valve 12f (12r) is altered from the assist increase pressure to the stop holding pressure when the slope starting control is to be executed in mid course of the brake assist control, it can be realized to alter the fluid pressure applied to the wheel cylinder 10fr (10fl, 10rr, 10rl) without causing any shock.

In a still further aspect of the foregoing embodiment, since the controlled differential pressure generated by the electromagnetic pressure control valve 12f (12r) is kept to hold the stop holding pressure when the brake assist control is to be executed in mid course of the slop starting control, it can be realized to hold the vehicle stopped reliably.

Obviously, numerous modifications and variations of the present invention are possible in light of the above teachings. It is therefore to be understood that within the scope of the appended claims, the present invention may be practiced otherwise than as specifically described herein.

A brake system is provided with a brake pressure control device which is light in weight and low in cost and which is capable of selectively performing a brake assist control and a slope starting control, An electromagnetic pressure control valve for generating a control differential pressure is connected between a master cylinder and wheel cylinders, and the control differential pressure is set to an assist increase pressure under the brake assist control. A brake fluid supply device such as a motor-driven pump is operated in the brake pressure control device to supply brake fluid between the electromagnetic pressure control valve and each of the wheel cylinders, The fluid pressure applied to the wheel cylinders is increased by the assist increase pressure than the fluid pressure delivered from the master cylinder, so that a large brake force is applied to road wheels. On the other hand, the brake fluid supply device is also operated under the brake assist control. Thus, even when the release of a brake pedal causes the master cylinder to deliver the fluid of zero-pressure, the stop holding pressure remains closed in each wheel cylinder, so that the road wheels are kept stopped with the brake forces applied thereon.

## Claims

1. A brake pressure control device in a brake system of the type that brake fluid whose pressure depends on the operation force exerted on a brake pedal is supplied from a master cylinder to a wheel cylinder serving as brake force generator thereby to apply a brake force to a road wheel, said brake pressure control device comprising:
an electromagnetic pressure control valve having Inlet and outlet ports respectively connected to said master cylinder and said wheel cylinder for controlling the fluid pressure at said outlet port to become higher from zero to a control differential pressure than the pressure at said inlet port in dependence on a control current applied thereto;
a fluid pump connected at ejection and suction ports thereof respectively to said outlet and inlet ports of said electromagnetic pressure control valve; and
control means for operating said fluid pump and for setting said control differential pressure generated by said electromagnetic pressure control valve to an assist increase pressure at the execution of a brake assist control and to a stop holding pressure at the execution of a slope starting control.

2. The brake pressure control device as set forth in Claim 1, further comprising:
a fluid pressure control device having an inlet port, an outlet port and a drain port respectively connected to said outlet port of said electromagnetic pressure control valve, said wheel cylinder and a reservoir for making said outlet port of said electromagnetic pressure control valve and said wheel cylinder connect with each other, disconnect from each other or connect with said reservoir;
a first conduit connecting said ejection port of said fluid pump to said outlet port of said electromagnetic pressure control valve and said inlet port of said fluid pressure control device through a first check valve for preventing fluid from flowing toward said ejection port; and
a second conduit connecting said suction port of said fluid pump to said drain port of said fluid pressure control device and said reservoir through a second check valve for permitting fluid to flow to said suction port.

3. The brake pressure control device as set forth in Claim 1. wherein said stop holding pressure is different from said assist Increase pressure.

4. The brake pressure control device as set forth in Claim 1, wherein said control differential pressure generated by said electromagnetic pressure control valve is altered from said assist increase pressure to said stop holding pressure when said slope starting control is to be executed in mid course of said brake assist control.

5. The brake pressure control device combination as set forth in Claim 1, wherein said control differential pressure generated by said electromagnetic pressure control valve remains set to said stop holding pressure when said brake assist control is to be executed in mid course of said slope starting control.
